**Europäisches Patentamt**

**European Patent Office**

**Office européen des brevets**

(19)

(11) Veröffentlichungsnummer: **0 294 673 B1**

# EUROPÄISCHE PATENTSCHRIFT

(12)

(45) Veröffentlichungstag der Patentschrift:
27.03.91 Patentblatt 91/13

(51) Int. Cl.⁵: **B60N 3/00**, B60H 1/00

(21) Anmeldenummer: 88108560.9

(22) Anmeldetag: 28.05.88

(54) Windfang zum Schutz vor Zugluft in dem geöffneten Fahrgastraum eines Fahrzeuges.

(30) Priorität: 06.06.87 DE 3719115

(43) Veröffentlichungstag der Anmeldung:
14.12.88 Patentblatt 88/50

(45) Bekanntmachung des Hinweises auf die
Patenterteilung:
27.03.91 Patentblatt 91/13

(84) Benannte Vertragsstaaten:
ES FR GB IT

(56) Entgegenhaltungen:
EP-A- 288 386
BE-A- 896 997
DE-A- 2 448 527

(56) Entgegenhaltungen:
FR-A- 2 397 957
FR-A- 2 598 366
GB-A- 175 293
GB-A- 2 182 010
US-A- 2 573 789
US-A- 3 002 784
US-A- 3 931 994

(73) Patentinhaber: Bayerische Motoren Werke
Aktiengesellschaft
Patentabteilung AJ-30 Postfach 40 02 40
Petuelring 130
W-8000 München 40 (DE)

(72) Erfinder: Groh, Günter
Föhrenweg 1
W-8056 Neufahrn (DE)

## Beschreibung

Die Erfindung betrifft einen Windfang zum Schutz vor Zugluft in dem geöffneten Fahrgastraum eines Fahrzeugs, insbesondere eines Cabriolets, mit den im Oberbegriff des Patentanspruches 1 angegebenen Merkmalen.

Ein derartiger Windfang ist bereits durch die GB-A-21 82 010 bekannt, der im Fahrgastraum eines geöffneten Fahrzeugs vor Zugluft schützt. Der Windfang weist eine vertikale Wand auf, die an einem hinter dem vorderen Fahrzeugsitzen horizontal angeordneten Deckel befestigt ist, der den hinteren Fahrgastraum abdeckt, wenn die hinteren Fahrzeugsitze nicht für Fahrgäste benötigt werden. Ein wesentlicher Nachteil ist darin zu sehen, daß dann, wenn die Rücksitze für Fahrgäste benötigt werden, der Deckel und die damit verbundene Wand zu entfernen sind, so daß das Fahrzeug in diesem Fall keinen vor Zugluft schützenden Windfang aufweist. Um die vorne im geöffneten Fahrzeug sitzenden Personen bei nicht besetzten Rücksitzen vor Zugluft schützen zu können, sind die beiden durch die Wand und den Deckel gebildeten Elemente gleichzeitig zu verwenden. Durch die einen Windfang bildende Wand ist lediglich der Kopfbereich der vorne im Fahrzeug sitzenden Personen vor Zugluft geschützt.

Das in der DE-A-24 48 527 zwischen den Rückenlehnen von zwei vorderen Fahrzeugsitzen angeordnete Sicherheitsnetz ist kein Windfang, sondern ein Rückhalteelement, das bei plötzlichen Fahrzeugverzögerungen ein Durchfallen oder Durchrutschen von hinter den vorderen Fahrzeugsitzen befindlichen Personen oder Gegenständen durch den Zwischenraum zwischen den Rückenlehnen verhindern soll und in Taschen Gegenstände aufnehmen kann. Dieses Sicherheitsnetz ist zwar am oberen Rand über elastische Bänder an den Rückenlehnen der Vordersitze befestigt, dieses Sicherheitsnetz ist jedoch kein weitgehend luftundurchlässiges Abdeckteil für den Zwischenraum zwischen den Rückenlehnen. Das Sicherheitsnetz ist schon aufgrund der fehlenden Anpassung an die Querschnittsfläche des Zwischenraumes nicht als Abdeckteil geeignet. Selbst wenn das Sicherheitsnetz luftundurchlässig ausgebildet wäre, könnte bei geöffneten Fahrgastraum aufgrund der durch das Sicherheitsnetz hervorgerufenen Stauwirkung Zugluft mit erhöhter Luftgeschwindigkeit durch den nicht abgedeckten Bereich des Zwischenraumes zwischen den Rückenlehnen insbesondere im empfindlichen Hüftbereich an den vorne im Fahrzeug sitzenden Personen vorbeiströmen, wodurch sich insbesondere der Unterleib dieser Personen unterkühlen kann. Auch die untere Befestigung des Sicherheitsnetzes an den am Fahrzeugboden befestigten und mit Schlössern versehenen Gurtpeitschen von Sicherheitsgurteinrichtungen ist einer Verwendung des Sicherheitsnetzes als Abdeckteil hinderlich.

Bei Längsverstellungen der Fahrzeusize in eine günstige Sitzlage verbleibt nämlich der untere Teil des Sicherheitsnetzes aufgrund der Anbindung an die Gurtpeitschen im wesentlichen in seiner Lage, wodurch sich der nicht von dem Sicherheitsnetz abgedeckte Bereich des Zwischenraumes vergrößern kann.

In der US-A-39 31 994 ist ein Trennelement angegeben, das nicht als Windfang angesehen werden kann. Es soll vielmehr den hinteren Teil des Fahrgastraumes von dem vorderen Bereich abtrennen, um bei nicht von Fahrgästen besetzten Rücksitzen nur den vorderen Bereich des Fahrgastraumes heizen oder kühlen zu müssen. Das Trennelement ist durch zwei transparente Einzelteile gebildet, die mit Scharnieren schwenkbar verbunden sind. Die Trennfuge und die Scharniere sind störend im Sichtbereich der Fahrgäste im Fondraum angeordnet. Außerdem wird insbesondere bei schrägem Lichteinfall an dem Trennelement durch Oberflächenreflektion ein störendes Spiegelbild von der Umgebung erzeugt. Bei plötzlichen Fahrzeugverzögerungen besteht die Gefahr, hart an dem Trennelement aufzuschlagen und sich dadurch zu verletzen.

Der Erfindung liegt die Aufgabe zugrunde, einen Windfang nach dem Oberbegriff des Patentanspruches 1 anzugeben, der im Sitzbereich in dem während der Fahrt geöffneten Fahrgastraum eines Fahrzeugs vor Zugluft schützt. Außerdem soll der Windfang einfach und kostengünstig zu fertigen und leicht zu montieren sein.

Diese Aufgabe ist durch die im Kennzeichen des Patentanspruches 1 angegebenen Merkmale gelöst. Besonders vorteilhaft ist, daß das Abdeckteil Zugluft durch den Zwischenraum zwischen den Lehnen von zwei vorderen Fahrzeugsitzen verhindert, so daß die Gefahr einer Unterkühlung insbesondere des Unterleibes einer auf einem vorderen oder hinteren Fahrzeugsitz befindlichen Person bei geöffnetem Fenster oder Dach bzw. beim Fahren ohne Verdeck in einem Cabriolet vermindert ist. Der Windfang kann ein einfaches Stoffteil sein, das beispielsweise ein Reststück eines zur Ausstattung des Fahrzeugs verwendeten Stoffes, beispielsweise des Verdeckstoffes eines Cabriolets ist. Ebenso kann das Abdeckteil ein Leder oder eine Kunststoff-Folie sein. Durch die Verwendung elastischer Bänder zur Befestigung des Abdeckteiles an den Rückenlehnen können die Rückenlehnen einzeln ohne weiteres verschwenkt werden, um beispielsweise das Einsteigen in das Fahrzeug zu erleichtern. Auch bei geöffneten Fahrzeugtüren und entgegengesetzt geneigten Rückenlehnen der Vordersitze wird die Zugluft vermindert, da das Abdeckteil den Zwischenraum zwischen den Rückenlehnen vollständig oder nahezu vollständig abdeckt.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen

Fig. 1 eine Ansicht des Windfanges von vorne,

Fig. 2 eine perspektivische Ansicht auf den zwischen zwei Rückenlehnen angeordneten Windfang und

Fig. 3 den über elastische Bänder an den Rückenlehnen befestigten Windfang bei entgegengesetzt geneigten Rückenlehnen.

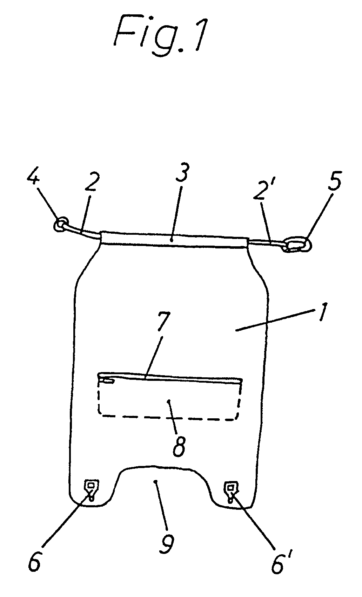

Der in Figur 1 dargestellte, aus einem luftundurchlässigen Stoffteil 1 gebildete Windfang zum Schutz vor Zugluft in einem Fahrzeug weist an seinem oberen Rand an beiden Seiten je ein elastisches Band 2, 2' auf. Der Windfang könnte aber auch aus einem Leder oder einer Kunststoff-Folie oder einer festen Abdeckplatte gebildet sein. Bei dem Ausführungsbeispiel sind die beiden Bänder 2, 2' durch ein einziges Gummiband gebildet, dessen mittlerer Bereich den umgeschlagenen und zu einer Öse vernähten oberen Rand 3 des Stoffteiles 1 durchsetzt. Ein Band 2 weist an seinem vorstehenden Ende einen Ring 4 auf, während das andere Band 2' mit einem Karabinerhaken 5 verbunden ist. Anstelle eines Karabinerhakens könnte auch an je einem freien Ende der Bänder 2, 2' ein Teil eines Druckschlosses vorgesehen sein. In diesem Fall können die Bänder 2, 2' beispielsweise außen um jeweils eine Haltestange der Kopfstützen 11, 11' herumgeführt und verbunden werden. Dies kann beispielsweise dadurch erfolgen, daß ein Teil des Druckschlosses eine elastische, mit einem Absatz versehene Nase aufweist, die von einem Vorsprung in einer Aufnahme an dem anderen Teil des Gurtschlosses hintergriffen wird. Die oberen seitlichen Bereiche des etwa rechteckförmigen Stoffteiles 1 sind im Ausführungsbeispiel ausgeschnitten. An den beiden unteren seitlichen Bereichen ist jeweils ein kunststoffbeschicheter Haken 6, 6' befestigt. Der untere mittlere Bereich des Stoffteiles 1 weist zur Anpassung an eine im mittleren Bereich des Fahrzeugs am Boden befestigte Ablage einen Ausschnitt 9 auf. Etwa in der Mitte des Stoffteiles 1 ist an der Rückseite und an der Vorderseite je eine von einem Reißverschluß 7 verschließbare Tasche 8 vorgesehen.

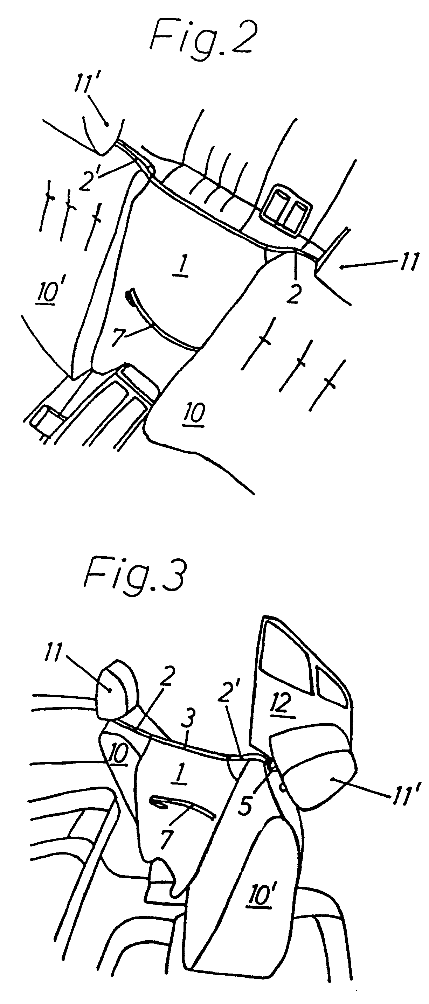

Bei dem Ausführungsbeispiel ist das Stoffteil 1 gemäß Figur 2 in dem Zwischenraum zwischen den beiden Rückenlehnen 10, 10' von zwei vorderen Fahrzeugsitzen eines Cabriolet-Fahrzeuges angeordnet. Durch das Stoffteil 1 wird eine beim Fahren ohne Verdeck normalerweise durch den Zwischenraum zwischen den vorderen Rückenlehnen 10, 10' entgegengesetzt zur Fahrtrichtung nach vorne strömende Zugluft verhindert. Hierzu ist das Stoffteil 1 lediglich mit seinen unteren, in Figur 2 nicht dargestellten Haken in entsprechende Gegenstücke beispielsweise in den unteren Seitenbereichen der Rückenlehnen 10, 10' oder an den zugeordneten Sitzteilen der vorderen Fahrzeugsitze einzuhängen und die elastischen Bänder 2, 2' an den Rückenlehnen 10, 10' zu befestigen. Die Befestigung der Bänder 2, 2' erfolgt bei dem Ausführungsbeispiel an den Haltestangen der über den Rückenlehnen 10, 10' angeordneten Kopfstützen 11, 11'. Dazu wird lediglich die vorzugsweise innere Haltestange der Kopfstütze 11 durch den am Ende des elastischen Bandes 2 vorgesehenen Ring hindurch in eine Aufnahme in der Oberseite der Rückenlehne 10 eingesteckt und der Karabinerhaken am anderen Band 2' an der vorzugsweise inneren Haltestange der Kopfstütze 11' befestigt. Anstelle des Ringes könnte aber auch ein Karabinerhaken oder ein anderes Befestigungselement vorgesehen sein. Die elastischen Bänder 2, 2' könnten ebenso auf andere Weise an den Rückenlehnen 10, 10' befestigt sein. Außerdem ist es möglich, daß die Haken jeweils unter Zwischenschaltung eines elastisch streckbaren Dehnbandes mit dem Stoffteil 1 verbunden sind.

Durch die elastischen Bänder 2, 2' können die Rückenlehnen 10, 10' wie in Figur 3 dargestellt auch einzeln nach vorne geschwenkt werden um beispielsweise das Einsteigen in das Fahrzeug zu erleichtern. Sind die in den unteren Seitenbereichen des Stoffteiles 1 vorgesehenen Haken über elastisch streckbare Dehnbänder mit dem Stoffteil 1 verbunden, so können die den Rückenlehnen 10, 10' zugeordneten Sitzteile der vorderen Fahrzeugsitze unabhängig voneinander in Längsrichtung verstellt werden, wenn die Haken in die entsprechende, nicht dargestellten Gegenstücke an den Rückenlehnen 10, 10' oder an den Sitzteilen eingehakt sind. Das Stoffteil 1 ist im Querschnitt an den Zwischenraum zwischen den Rückenlehnen 10, 10' angepaßt. Der Zwischenraum ist jedoch durch die Neigungsverstellung der Rückenlehnen 10, 10' veränderlich. Die Breite des Stoffes 1 ist deshalb bei dem Ausführungsbeispiel größer als der seitliche Abstand der beiden gleich geneigten Rückenlehnen 10, 10', der etwa der Breite des schmäleren oberen Randes 3 des Stoffteiles 1 entspricht. Der Zwischenraum ist bei gleich geneigten und nebeneinander angeordneten Rückenlehnen 10, 10' vollständig von dem Stoffteil 1 abgedeckt, wobei die seitlichen Ränder des Stoffteiles 1 umgebogen sind. Wird eine 10' der Rückenlehnen 10, 10' beispielsweise bei geöffneter Fahrzeugtür nach vorne geneigt, um das Einsteigen in das Fahrzeug zu erleichtern, so werden die Seitenbereiche in die Ebene des Stoffteiles 1 verlagert, so daß auch der vergrößerte Zwischenraum nahezu vollständig von dem Stoffteil 1 abgedeckt ist. Auf diese Weise wird auch die bei geöffneter Tür entstehende Zugluft insbesondere auf den Rücksitzen vermindert.

## Ansprüche

1. Windfang zum Schutz vor Zugluft in dem geöffneten Fahrgastraum eines Fahrzeugs, insbesondere eines Cabriolets, der in einem oberen Höhenbereich der Rückenlehnen von zwei vorderen Fahrzeugsitzen in Querrichtung angeordnet und weitgehend luftundurchlässig ausgebildet ist, dadurch gekennzeichnet, daß der Windfang ein im wesentlichen zwischen den Rückenlehnen der vorderen Fahrzeugsitze angeordnetes Abdeckteil (Stoffteil 1) aus Stoff, Leder oder einer Kunststoff-Folie ist, das im Querschnitt an den Zwischenraum zwischen den Rückenlehnen (10, 10') angepaßt ist und diesen nahezu vollständig oder vollkommen abdeckt, und an dem oberen Randbereich des Abdeckteiles (Stoffteil 1) seitlich je ein elastisches Band befestigt ist, das an seinem freien Ende mit der zugeordneten Rückenlehne (10, 10') verbindbar ist, und unterhalb der Befestigung des elastischen Bandes das Abdeckteil (Stoffteil 1) an seinen Seitenbereichen jeweils mit der Rückenlehne (10, 10') oder dem Sitzteil des zugeordneten Fahrzeugsitzes verbindbar ist.

2. Windfang nach Anspruch 1, dadurch gekennzeichnet, daß das Abdeckteil (Stoffteil 1) den Zwischenraum vollständig abdeckt, wenn die beiden vorderen Rückenlehnen (10, 10') nebeneinander angeordnet sind und eine etwa gleiche Neigung aufweisen.

3. Windfang nach Anspruch 1, dadurch gekennzeichnet, daß das freie Ende des Bandes (2, 2') über einen Ring, einen Karabinerhaken (5) oder ein Druckschloß an einer Haltestange einer über der Rückenlehne (10') angeordneten Kopfstütze (11') zu befestigen ist.

4. Windfang nach Anspruch 1, dadurch gekennzeichnet, daß das Abdeckteil (Stoffteil 1) an beiden unteren seitlichen Randbereichen je einen Haken (6, 6') aufweist, der an einem Gegenstück an der Rückenlehne (10, 10') oder an dem Sitzteil des Fahrzeugsitzes einzuhaken ist.

5. Windfang nach Anspruch 4, dadurch gekennzeichnet, daß der Haken (6, 6') am freien Ende eines am Abdeckteil (Stoffteil 1) befestigten, elastisch streckbaren Dehnbandes angeordnet ist.

6. Windfang nach Anspruch 1, dadurch gekennzeichnet, daß das Abdeckteil (Stoffteil 1) an seinem unteren Rand an die Kontur einer zwischen den Fahrzeugsitzen am Boden befestigten Ablage angepaßt ist.

7. Windfang nach Anspruch 1, dadurch gekennzeichnet, daß das Abdeckteil (Stoffteil 1) an seiner Vorderseite und/oder an seiner Rückseite eine verschließbare Tasche (8) aufweist.

## Claims

1. A draught-screen for protection from draught in the open passenger area of a vehicle, in particular of a cabriolet, which is arranged in an upper vertical region of the backrests of two front vehicle seats in transverse direction and is constructed so as to be largely impervious to air, characterised in that the draught-screen is a covering piece (material piece 1), arranged substantially between the backrests of the front vehicle seats, of material, leather or a film of plastics material, which is matched transversely to the intermediate space between the backrests (10, 10') and covers it almost totally or completely, and on the upper edge region of the covering piece (material piece 1) an elastic strip is attached laterally in each case, which strip is able to be connected at its free end with the associated backrest (10, 10'), and beneath the attachment of the elastic strip the covering piece (material piece 1) is able to be connected at its lateral regions respectively with the backrest (10, 10') or with the seat part of the associated vehicle seat.

2. A draught-screen according to Claim 1, characterised in that the covering piece (material piece 1) covers the intermediate space completely when the two front backrests (10, 10') are arranged adjacent to each other and have an approximately identical inclination.

3. A draught-screen according to Claim 1, characterised in that the free end of the strip (2, 2') is to be attached by means of a ring, a snap hook (5) or a pressure lock on a holding rod of a headrest (11') arranged above the backrest (10').

4. A draught-screen according to Claim 1, characterised in that the covering piece (material piece 1) has a hook (6, 6') in each case on the two lower lateral edge regions, which hook is to be engaged on a counter-piece on the backrest (10, 10') or on the seat part of the vehicle seat.

5. A draught-screen according to Claim 4, characterised in that the hook (6, 6') is arranged on the free end of an elastically extensible tensible strip which is secured to the covering piece (material piece 1).

6. A draught-screen according to Claim 1, characterised in that the covering piece (material piece 1) is matched at its lower edge to the contour of a storage area secured to the floor between the vehicle seats.

7. A draught-screen according to Claim 1, characterised in that the covering piece (material piece 1) has a closable pocket (8) on its front side and/or on its reverse side.

## Revendications

1. Pare-vent pour la protection contre les courants-d'air dans l'habitacle ouvert d'un véhicule, notamment d'un cabriolet, qui est disposé dans la région supérieure de la hauteur des dossiers des deux sièges avant d'un véhicule suivant une direction transversale et qui est, de par sa constitution, dans une grande mesure imperméable à l'air, caractérisé en ce que le pare-vent est une partie d'obturation (pièce de tissu 1) en tissu, en cuir ou en feuille de matière plastique, essentiellement disposée entre les dossiers des sièges avant du véhicule, en ce que sa section est adaptée à l'intervalle entre les dossiers (10, 10') et obture celui-ci jusqu'entièrement ou entièrement, en ce qu'il est fixé de chaque côté de la région supérieure de bord de la partie d'obturation (pièce de tissu 1), un cordon élastique, qui peut être relié par son extrémité libre au dossier (10, 10') qui lui est adjoint, et en ce que la partie d'obturation (partie de tissu 1) peut, en-dessous de la fixation du cordon élastique, être reliée respectivement par ses régions latérales au dossier (10, 10') ou à la partie de siège du siège du véhicule correspondant.

2. Pare-vent selon la revendication 1, caractérisé en ce que la partie d'obturation (pièce de tissu 1) obture entièrement l'intervalle lorsque les deux dossiers avant (10, 10') sont disposés côte à côte et présentent sensiblement la même inclinaison.

3. Pare-vent selon la revendication 1, caractérisé en ce que l'extrémité libre du cordon (2, 2') est à fixer au moyen d'un anneau, d'un mousqueton (5) ou d'une serrure à pression sur une tige de maintien d'un appuie-tête (11') disposé sur le dossier (10').

4. Pare-vent selon la revendication 1, caractérisé en ce que la partie d'obturation (pièce de tissu 1) présente respectivement à ses deux régions de bord inférieures latérales un crochet (6, 6') qu'il y a lieu d'accrocher sur un élément opposé fixé sur le dossier (10, 10') ou sur la partie d'assise du siège du véhicule.

5. Pare-vent selon la revendication 4, caractérisé en ce que le crochet (6, 6') est disposé à l'extrémité libre d'un ruban souple, élastiquement extensible, fixé sur la partie d'obturation (pièce de tissu 1).

6. Pare-vent selon la revendication 1, caractérisé en ce que la partie d'obturation (pièce de tissu 1) est adaptée sur son bord inférieur au contour d'une dépose fixée sur'le plancher entre les sièges du véhicule.

7. Pare-vent selon la revendication 1, caractérisé en ce que la partie d'obturation (pièce de tissu 1) présente sur sa face avant et/ou sur sa face arrière une poche pourvue d'une fermeture.

# Fig.1

# Fig.2

# Fig.3

7